(19) **Europäisches Patentamt / European Patent Office / Office européen des brevets**

(11) **EP 4 560 350 A1**

(12) **EUROPEAN PATENT APPLICATION**

(43) Date of publication:
28.05.2025 Bulletin 2025/22

(21) Application number: 24214716.3

(22) Date of filing: 22.11.2024

(51) International Patent Classification (IPC):
G01S 7/35 (2006.01)    G01S 13/34 (2006.01)
H04B 7/06 (2006.01)    H04B 7/08 (2006.01)
G01S 13/02 (2006.01)    G01S 13/10 (2006.01)
G01S 13/42 (2006.01)    G01S 13/931 (2020.01)

(52) Cooperative Patent Classification (CPC):
**G01S 13/343; G01S 7/282; G01S 13/345;
G01S 13/4454;** G01S 7/356; G01S 7/358;
G01S 13/0209; G01S 13/26; G01S 13/931;
G01S 13/95; H04B 7/0608; H04B 7/0802

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 23.11.2023 TW 112145295

(71) Applicant: **RichWave Technology Corp.
Taipei City 114 (TW)**

(72) Inventor: **Yeh, Chiang-Hua
114 Taipei City (TW)**

(74) Representative: **Straus, Alexander
2K Patentanwälte - München
Bajuwarenring 14
82041 Oberhaching (DE)**

(54) **RADAR APPARATUS AND METHOD EMPLOYING SELECTION BETWEEN MULTIPLE TRANSMITTING ANTENNAS AND MULTIPLE RECEIVING ANTENNAS**

(57) A transceiving method of signals and a radar apparatus are provided. The radar apparatus includes a transmitting circuit, multiple transmitting antennas, multiple receiving antennas, a receiving circuit, a selection controller and a selection circuit. The transmitting circuit generates a transmission signal based on the detection signal, wherein the detection signal has periodic changes. The transmitting antenna transmits a transmission signal. The receiving antenna receives a reflected signal. The receiving circuit generates an internal signal based on the detection signal and a radio frequency signal. The selection controller generates a control signal based on the period of the detection signal. The selection circuit selects one of multiple transmitting antennas to transmit the transmission signal and selects one of multiple receiving antennas to receive the reflected signal to generate the radio frequency signal based on the control signal generated by the selection controller.

FIG. 2A

EP 4 560 350 A1

**Description**

Field of the Invention

The present disclosure is related to signal processing technology, in particularly, to a transceiving method of signals and a radar apparatus.

Background of the Invention

Radar technology has been developed for many years. There are two main types of radar: pulse radar and continuous wave radar. Generally speaking, pulse radar emits high-frequency pulses with periodic information. Continuous wave radar emits continuous wave signals. With the rapid development of technology, Frequency Modulated Continuous Wave (FMCW) radar has been widely used in various fields in recent years.

The FMCW radar emits a continuous wave with frequency changes within the frequency sweep period. There is a certain frequency difference between the reflected signal of the continuous wave reflected by the object and the transmitted signal, and based on the frequency difference, a distance between the object and the radar may be determined. As the FMCW radar can measure the distance and speed of moving targets, it has gradually been widely applied in civilian fields such as vehicle monitoring recording systems, automobile anti-collision radars, traffic flow detectors, and autonomous driving.

It is worth noting that the FMCW radar system can estimate the angle of the signal reflected (also known as the Angle of Arrival, AoA) by using array antennas. When there is a slight change in the distance between the radar system and an object, the phase at the peak of the spectrum will change significantly, especially in the case of high-frequency signals. Thus, the phase change corresponding to the distance difference between the object and the adjacent antennas may be used to estimate the Angle of Arrival.

In order to use array antennas, current FMCW radar systems for Angle of Arrival estimation use a multi-receiver architecture. The reflected signals of the transmission signals reflected by the object may be respectively received by multiple receiving antennas.

However, the traditional AoA radar architecture may encounter the following problems: the need for multiple receiving paths (i.e. multiple receivers); increased power consumption; larger chip size as the number of receivers increases; and the need to correct the local oscillator phase on the receivers and transmitters.

Summary of the Invention

The present invention aims at providing a transceiving method of signals and a radar apparatus capable of reducing power consumption, reducing the size of the antenna structure or chip, and reducing phase error.

This is achieved by a radar apparatus according to claims 1 and 15 and a transceiving method of signals according to claim 11. The dependent claims pertain to corresponding further developments and improvements.

Brief Description of the Drawings

In the following, the invention is further illustrated by way of example, taking reference to the accompanying drawings.

Figure 1 is a component block diagram of a radar apparatus according to an embodiment of this disclosure;
Figure 2A is a component block diagram of a radar apparatus according to an embodiment of this disclosure;
Figure 2B is a component block diagram of a radar apparatus according to another embodiment of this disclosure;
Figure 3 is a schematic diagram of an Angle of Arrival according to an embodiment of this disclosure;
Figure 4A is a schematic diagram of the antenna configuration according to the first embodiment of this disclosure;
Figure 4B is a schematic diagram of the antenna configuration according to the second embodiment of this disclosure;
Figure 5 is a schematic diagram of the periods of detection signals and antenna switching according to an embodiment of this disclosure;
Figure 6A is a schematic diagram of the antenna configuration, transmission angle, and Angle of Arrival according to an embodiment of this disclosure;
Figure 6B is a schematic diagram of the antenna configuration and equivalent virtual antenna according to an embodiment of this disclosure;
Figure 6C is a schematic diagram of the antenna configuration and equivalent virtual antenna according to another embodiment of this disclosure;
Figure 7A is a schematic diagram of the antenna configuration according to the third embodiment of this disclosure;

Figure 7B is a schematic diagram of the antenna configuration according to the fourth embodiment of this disclosure;
Figure 8 is a schematic diagram of the antenna configuration, transmission angle, and Angle of Arrival according to an embodiment of this disclosure;
Figure 9 is a schematic diagram of the periods of the detection signals and antenna switching according to an embodiment of this disclosure;
Figure 10A is a schematic diagram of the antenna configuration according to the fifth embodiment of this disclosure;
Figure 10B is a schematic diagram of the radiation pattern of Figure 10A;
Figure 11A is a schematic diagram of the antenna configuration according to the sixth embodiment of this disclosure;
Figure 11B is a schematic diagram of the radiation pattern of Figure 11A;
Figure 12 is a component block diagram of a radar apparatus according to an embodiment of this disclosure;
Figure 13 is a flowchart of determining spatial information according to an embodiment of this disclosure;
Figure 14 is a schematic diagram of signal processing according to an embodiment of this disclosure; and
Figure 15 is a flowchart of a transceiving method of signals according to an embodiment of this disclosure.

Detailed Description

Reference will now be made in detail to the exemplary embodiments of the disclosure, examples of which are illustrated in the accompanying drawings. Wherever possible, the same reference numbers are used in the drawings and the description to refer to the same or like parts.

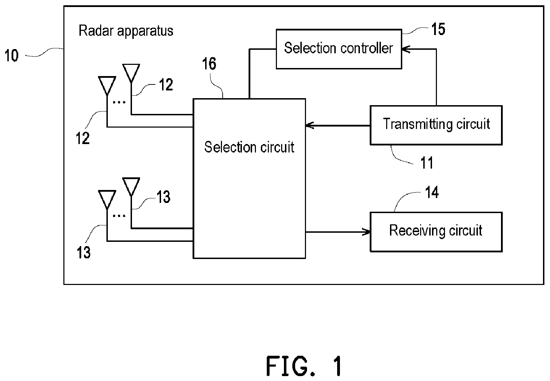

Figure 1 is a component block diagram of a radar apparatus 10 according to an embodiment of this disclosure. Please refer to Figure 1. The radar apparatus 10 includes (but is not limited to) a transmitting circuit 11, multiple transmitting antennas 12, multiple receiving antennas 13, a receiving circuit 14, a selection controller 15, and a selection circuit 16. The radar apparatus 10 may be applied in fields such as meteorology, speed measurement, vehicle reversing, terrain, military, or the like. The radar apparatus 10 may be a Frequency Modulated Continuous Wave (FMCW) radar or an Ultra Wideband (UWB) radar.

The transmitting circuit 11 is configured to generate a transmission signal based on a detection signal. The detection signal has periodic changes. In an embodiment, the frequency of the detection signal changes over time within its frequency sweep period. For example, the detection signal is a carrier signal of periodic sawtooth wave, triangular wave, or others used for frequency modulated continuous waves (e.g. linear, geometric, or other chirp signals). Within the period, the frequency of the detection signal may gradually increase and/or gradually decrease. In another embodiment, the detection signal is a pulse signal. For example, there are peaks or valleys within a specific time interval (e.g. 2, 5, or 110 nanoseconds (ns)). A pulse signal may be generated every interval of a period.

The transmitting antenna 12 is configured to transmit the transmission signal. That is, the electromagnetic wave emitted carries the transmission signal of the radar apparatus 10. In an embodiment, since the detection signal has periodic changes, the signal transmitted will correspondingly have periodic changes. In an embodiment, for pulse signals, the signal transmitted is a spread spectrum signal with a flat frequency response on the spectrum.

In an embodiment, the multiple transmitting antennas 12 form an antenna array. The number of the transmitting antennas 12 in the antenna array, for example, is 2, 4, or 8, but is not limited thereto. In an embodiment, each of the transmitting antennas 12 may correspond to an antenna port.

The receiving antenna 13 is configured to receive the reflected signal. In an embodiment, a radar apparatus 10 may transmit the transmission signal to an external object (e.g. a human being, car, wall, or building) via the transmitting antenna 12. Then, the radar apparatus 10 may receive the reflected signal reflected from the external object via the receiving antenna 13. The reflected signal is generated by the reflection of the transmission signal by the external object.

In an embodiment, the multiple receiving antennas 13 form an antenna array. The number of the receiving antennas 13 in the antenna array, for example, is 2, 4, or 8, but is not limited thereto. In an embodiment, each of the receiving antennas 13 corresponds to an antenna port.

The receiving circuit 14 is configured to generate an internal signal based on the detection signal and the radio frequency signal. In an embodiment, the detection signal has periodic changes, and the radio frequency signal is generated based on the reflected signal, which will be detailed in subsequent embodiments.

The selection controller 15 is coupled to the transmitting circuit 11. The selection controller 15 is configured to generate one or more control signals based on the period of the detection signal. The switching or changing time point of the control signal, for example, and is at the boundary of two periods of the detection signal, which will be detailed in subsequent embodiments.

The selection circuit 16 is coupled to the transmitting antennas 12, the receiving antennas 13, the transmitting circuit 11, the receiving circuit 14, and the selection controller 15. The selection circuit 16 is configured to select one of the multiple transmitting antennas 12 to transmit the transmission signal, and select one of the multiple receiving antennas 13 to receive the reflected signal based on one or more control signals generated by the selection controller 15 to generate a radio frequency signal. Each control signal corresponds to a transmission-reception combination. Each transmission-reception combination includes a combination of one of the multiple transmitting antennas 12 and one of the multiple receiving antennas 13.

In other embodiments, the selection controller 15 may also be configured to generate a control signal based on the period of the detection signal. The selection circuit 16 may also be configured to select one of the multiple transmitting antennas 12 to transmit the transmission signal based on the control signal generated by the selection controller 15, but does not select the multiple receiving antennas 13. Instead, it allows the multiple receiving antennas 13 to synchronously receive multiple reflected signals to generate multiple radio frequency signals, in which these reflected signals are generated by the reflection of the transmission signal by the external object. The receiving circuit 14 may also be configured to generate an internal signal based on the detection signal and these radio frequency signals. Under such a structure, at least some power consumption may be reduced and the size of some antenna structures or chips may be reduced.

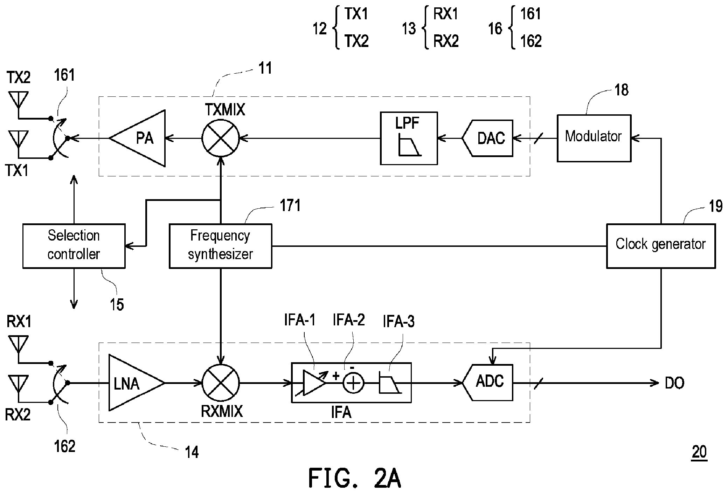

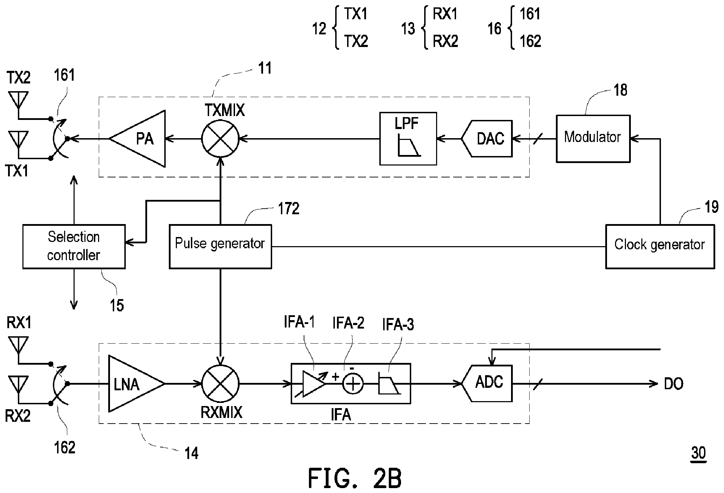

The following, in conjunction with Figures 2A and 2B, more specifically illustrates the detailed hardware architecture of the radar apparatus 10.

Figure 2A is a component block diagram of a radar apparatus 20 according to an embodiment of the disclosure. Please refer to Figure 2A. The radar apparatus 20 includes (but is not limited to) the transmitting circuit 11, the transmitting antenna 12, the receiving antenna 13, the receiving circuit 14, the selection controller 15, and the selection circuit 16. Moreover, the radar apparatus 20 may further include (but is not limited to) a frequency synthesizer 171, a modulator 18, and a clock generator 19.

The transmitting circuit 11 includes an amplifier PA and a mixer TXMIX. The amplifier PA is coupled to the mixer TXMIX. The amplifier PA is configured to amplify signals (e.g. the output signal of the mixer TXMIX). The mixer TXMIX is configured to mix signals to generate a transmission signal. Moreover, the transmitting circuit 11 may further include (but is not limited to) a filter LPF and a digital-to-analog converter DAC.

In this embodiment, the transmitting antenna 12, for example, includes two transmitting antennas TX1, TX2. The two transmitting antennas TX1, TX2 form an antenna array.

In this embodiment, the receiving antenna 13, for example, includes two receiving antennas RX1, RX2. The two receiving antennas RX1, RX2 form an antenna array.

The receiving circuit 14 includes a low noise amplifier LNA and a mixer RXMIX. The low noise amplifier LNA is coupled to the mixer RXMIX. The low noise amplifier LNA is configured to amplify signals (e.g. reflected signals). The mixer RXMIX is configured to mix signals (e.g. the output signal of the low noise amplifier LNA) to generate an intermediate frequency signal. Moreover, the receiving circuit 14 may further include (but is not limited to) an intermediate frequency amplifier circuit IFA and an analog-to-digital converter ADC.

The selection circuit 16 includes switching circuits 161, 162. The switching circuits 161, 162 may be composed of one or more multiplexers, switches, and other electrical components, and the embodiments of the disclosure are not limited thereto. In an embodiment, the switching circuit 161 may switch between the transmission signals respectively received from the two transmitting antennas TX1, TX2. In an embodiment, the switching circuit 162 may switch between the reflected signals respectively received from the two receiving antennas RX1, RX2. In another embodiment, the selection circuit 16 can also achieve the purpose of selection by disabling the unused transmitting antenna among the two transmitting antennas TX1, TX2, and disabling the unused receiving antenna among the two receiving antennas RX1, RX2.

In this embodiment, the frequency synthesizer 171 is coupled to the transmitting circuit 11 and the receiving circuit 14. In an embodiment, the selection controller 15 is coupled to the transmitting circuit 11 via the frequency synthesizer 171. In another embodiment, the selection controller 15 is directly connected to the transmitting circuit 11. The frequency synthesizer 171 is configured to generate a detection signal and provide the detection signal to the transmitting circuit 11, the receiving circuit 14, and the selection controller 15. At this time, the detection signal is a continuous wave signal.

The modulator 18 may be implemented via an N-stage (N is a positive integer greater than zero) oversampling modulator or an N-bit Nyquist frequency sampler.

The clock generator 19 is coupled to the frequency synthesizer 171, the modulator 18, and the analog-to-digital converter ADC. The clock generator 19 is configured to generate a clock signal (or a local oscillator signal). The frequency synthesizer 171 generates a periodic detection signal based on the clock signal. The selection controller 15 synchronizes the detection signal based on the clock signal. Further, the synchronization of the above detection signal may be regarded as having a fixed overlap range between the time when the control signal remains unchanged and the period of the detection signal. For example, the switching or changing period of the control signal may be made the same as the period of the detection signal, or the switching or changing time point of the control signal may be synchronized to the time point shifted forward or backward by a predetermined time from the start point or end point of the period of the detection signal, or the switching or changing time point of the control signal may be synchronized to the start point or end point of the period of the detection signal.

In an embodiment, the modulator 18 oversamples and modulates the clock signal to generate a sine wave-like digital signal, and drives the digital-to-analog converter DAC to generate an analog sine wave signal. The filter LPF then performs low-pass filtering on the analog sine wave signal to form a sine wave signal input to the mixer TXMIX. The mixer TXMIX forms a transmission signal by mixing (e.g. up-conversion) the sine wave signal based on the detection signal (e.g. continuous wave signal) from the frequency synthesizer 171. The transmission signal will be transmitted via the transmitting antenna TX1 or TX2 conducted/switched by the switching circuit 161.

On the other hand, the reflected signal is received via the receiving antenna RX1 or RX2 conducted/switched by the switching circuit 162. The low noise amplifier LNA amplifies the reflected signal received by the receiving antenna RX1 or RX2, and the mixer RXMIX mixes the amplified signal (e.g. down-conversion) based on the detection signal (e.g. continuous wave signal) generated by the frequency synthesizer 171, to generate an intermediate frequency signal.

The intermediate frequency amplifier circuit IFA includes an intermediate frequency amplifier IFA-1, a correction circuit IFA-2 (optional), and a filter IFA-3. The intermediate frequency amplifier IFA-1 filters the intermediate frequency signal and amplifies signal in a specific frequency band, then filters the signal in the desired frequency band via the filter, and converts it into a baseband signal DO (e.g. a baseband digital signal) via the analog-to-digital converter ADC. The correction circuit IFA-2 may be a summation circuit, and may sum the intermediate frequency signal with the inverted sine wave signal (i.e. subtract the analog sine wave signal generated by the digital-to-analog converter DAC from the intermediate frequency signal). The correction circuit IFA-2 may correct problems such as flicker noise, DC offset, and local oscillator leakage of the reflected signal based on the sine wave signal. In other embodiments, the position of the correction circuit IFA-2 may be different. For example, it may be located before the intermediate frequency amplifier IFA-1 (i.e. coupled between the mixer RXMIX and the intermediate frequency amplifier IFA-1), or it may be provided after the filter IFA-3 (i.e. coupled between the filter IFA-3 and the analog-to-digital converter ADC).

Figure 2B is a component block diagram of a radar apparatus 30 according to another embodiment of the disclosure. Please refer to Figure 2B. The radar apparatus 30 includes (but is not limited to) the transmitting circuit 11, the transmitting antenna 12, the receiving antenna 13, the receiving circuit 14, the selection controller 15, and the selection circuit 16. Moreover, the radar apparatus 30 may further include (but is not limited to) a pulse generator 172, the modulator 18, and the clock generator 19. The transmitting circuit 11 in Figure 2B may further include (but is not limited to) the filter LPF and the digital-to-analog converter DAC. The receiving circuit 14 in Figure 2B may further include (but is not limited to) the intermediate frequency amplifier circuit IFA and the analog-to-digital converter ADC.

For descriptions of the transmitting circuit 11, the transmitting antenna 12, the receiving antenna 13, the receiving circuit 14, the selection controller 15, the selection circuit 16, the modulator 18, the clock generator 19, the filter LPF, the digital-to-analog converter DAC, the intermediate frequency amplifier circuit IFA, and the analog-to-digital converter ADC in Figure 2B, please refer to the descriptions of the same reference numerals in Figures 1 and 2A, which not repeated here.

In this embodiment, the pulse generator 172 is coupled to the transmitting circuit 11 and the receiving circuit 14. The pulse generator 172 is configured to generate detection signals and provide the detection signals to the transmitting circuit 11, the receiving circuit 14, and the selection controller 15. At this time, the detection signal is a pulse signal. In an embodiment, the selection controller 15 is coupled to the transmitting circuit 11 via the pulse generator 172. In another embodiment, the selection controller 15 is directly connected to the transmitting circuit 11, and the transmitting circuit 11 may generate pulse signals by turning on signal output and turning off signal output. In this embodiment, the clock generator 19 is coupled to the pulse generator 172, the modulator 18, and the analog-to-digital converter ADC. The clock generator 19 is configured to generate a clock signal (or a local oscillator signal). The pulse generator 172 generates a periodic detection signal based on the clock signal. The selection controller 15 synchronizes the detection signal based on the clock signal. Further, the synchronization of the above detection signal may be regarded as having a fixed overlap range between the time when the control signal remains unchanged and the period of the detection signal. For example, the switching or changing period of the control signal may be made the same as the period of the detection signal, or the switching or changing time point of the control signal may be synchronized to the time point shifted forward or backward by a predetermined time from the start point or end point of the period of the detection signal, or the switching or changing time point of the control signal may be synchronized to the start point or end point of the period of the detection signal.

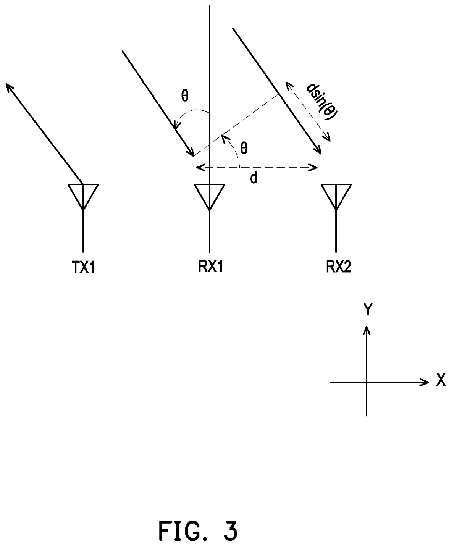

Figure 3 is a schematic diagram of an Angle of Arrival θ according to an embodiment of the disclosure. Please refer to Figure 3. The radar apparatuses 20, 30 may transmit transmission signals to an external object (also known as target) via the transmitting antenna TX1. The receiving antennas RX1, RX2 receive reflected signals reflected from the external object. Assuming that on an X-Y plane, the two receiving antennas RX1, RX2 are separated by a distance d (e.g. half a wavelength of the detection signal), in which the receiving antenna RX2 is further away from the transmitting antenna TX1 compared to the receiving antenna RX1. Thus, a round-trip distance from the transmitting antenna TX1 to the receiving antenna RX1 via the external object is different from a round-trip distance from the transmitting antenna TX1 to the receiving antenna RX2 via the external object by dsinθ. The distance difference of dsinθ will be reflected in the phase difference between the reflected signals of the two receiving antennas RX1, RX2, and the Angle of Arrival θ may be estimated accordingly.

For example, the transmitting antenna TX1 transmits a continuous wave signal of a frame (corresponding to one or more periods). By performing a two-dimensional Fast Fourier Transform (FFT) respectively on the baseband signals corresponding to the two receiving antennas RX1, RX2, two peaks at the same distance (corresponding to the position of the external object) but different phases may be obtained. Then, a phase difference ($\omega$) of the two peaks may be used to estimate the Angle of Arrival $\theta$ of the external object:

$$\omega = \frac{2\pi d sin(\theta)}{\lambda}\ldots (1)$$

$$\theta = sin^{-1}\left(\frac{\lambda\omega}{2\pi d}\right)\ldots (2),$$

in which $\lambda$ is the wavelength, d is the distance between the two receiving antennas RX1, RX2.

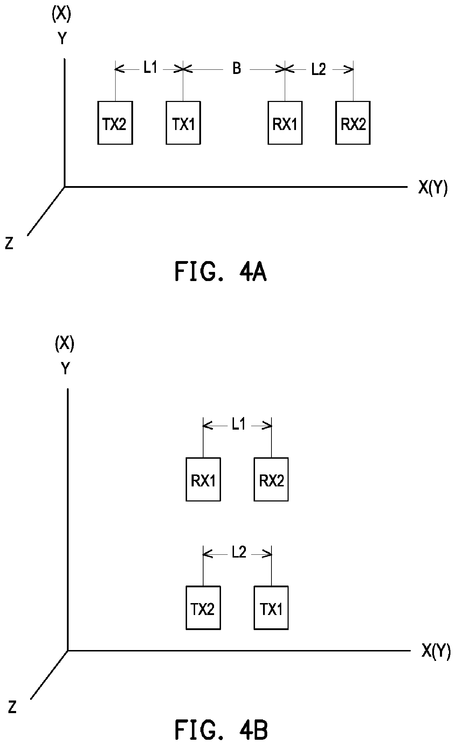

Figure 4A is a schematic diagram of the antenna configuration according to the first embodiment of the disclosure. Please refer to Figure 4A. The multiple transmitting antennas 12 include the two transmitting antennas TX1, TX2 located on an X-Y/Y-X plane. There is a spacing L1 (e.g. half the wavelength or the same as the wavelength of the detection signal, but not limited thereto) between the two transmitting antennas TX1, TX2. The multiple receiving antennas 13 include the two receiving antennas RX1, RX2 located on the X-Y/Y-X plane. There is a spacing L2 (e.g. half the wavelength or the same as the wavelength of the detection signal, but not limited thereto) between the two receiving antennas RX1, RX2. The transmitting antennas TX1, TX2 and the receiving antennas RX1, RX2 are both arranged in a direction parallel to the X-axis of the X-Y plane or parallel to the Y-axis of the Y-X plane. That is, the transmitting antennas TX1, TX2 and the receiving antennas RX1, RX2 are arranged in the same direction. Compared to the transmitting antenna TX2, the transmitting antenna TX1 is closer to the receiving antennas RX1, RX2; and, compared to the receiving antenna RX2, the receiving antenna RX1 is closer to the transmitting antennas TX1, TX2. There is a spacing B (which may be defined according to the designer's needs) between the transmitting antenna TX1 and the receiving antenna RX2. In the direction parallel to the Y-axis of the X-Y plane or parallel to the X-axis of the Y-X plane, the distance between the transmitting antennas TX1/TX2 and the receiving antennas RX1/RX2 is zero (i.e. arranged along an imaginary straight line parallel to the X-axis of the X-Y plane or parallel to the Y-axis of the Y-X plane).

In an embodiment, the spacing L1 is equal to/same as the spacing L2. In another embodiment, the spacing L1 is twice the spacing L2. In yet another embodiment, the spacing L2 is twice the spacing L1. In other embodiments, the spacing L1 and the spacing L2 may also be in other ratios.

It should be noted that the X-Y/Y-X plane is formed by the X-axis (corresponding to the horizontal direction in the X-Y plane, and corresponding to the vertical direction in the Y-X plane) and the Y-axis (corresponding to the vertical direction in the X-Y plane, and corresponding to the horizontal direction in the Y-X plane), and the X-axis is perpendicular to the Y-axis.

Figure 4B is a schematic diagram of the antenna configuration according to the second embodiment of the disclosure. Please refer to Figure 4B. The difference from the antenna configuration of the first embodiment in Figure 4A is that in the direction parallel to the Y-axis of the X-Y plane or parallel to the X-axis of the Y-X plane, there is a spacing (which may be defined according to the designer's needs) between the transmitting antennas TX1/TX2 and the receiving antennas RX1/RX2. In other words, the distance between the transmitting antennas TX1/TX2 and the receiving antennas RX1/RX2 may be greater than zero. As shown in the diagram, compared to the transmitting antennas TX1/TX2, the antennas RX1/RX2 are further away from the X-axis of the X-Y plane or the Y-axis of the Y-X plane.

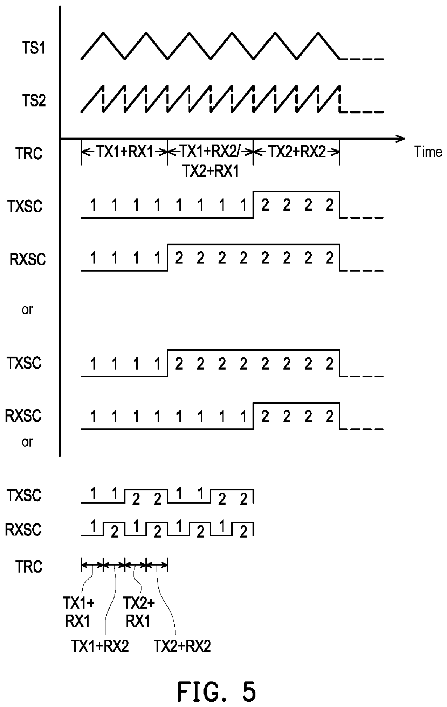

In an embodiment, one frame time includes multiple transceiving periods, and these transceiving periods correspond to the periods of the detection signals. For example, Figure 5 is a schematic diagram of the periods of detection signals TS1, TS2 and the antenna switching according to an embodiment of the disclosure. Please refer to Figure 5. The detection signal is, for example, a continuous wave signal, and is expressed as a chirp signal (frequency changing with time), and in this embodiment, the period of the detection signals is, for example, the frequency change period of the detection signals. In one example, the detection signal TS1 is presented as a triangular wave with frequency changes. Within one period of the triangular wave, the frequency increases/rises with time in the ascending section, and the frequency decreases/falls with time in the descending section. Alternatively, in another example, the detection signal TS2 is presented as a sawtooth wave with frequency changes. Within one period of the sawtooth wave, the frequency increases/rises with time in the ascending section, and the frequency directly drops to the valley in the descending section. One frame time includes three transceiving periods. Each transceiving period may include, for example, two periods of the detection signal TS1, or may include four periods of the detection signal TS2.

Based on one or more control signals, the switching circuits 161, 162 of the selection circuit 16 are configured to select only one of the multiple transmitting antennas 12 (in this embodiment, the transmitting antennas TX1, TX2) respectively in each transceiving period within the frame time to transmit the transmission signal and to select only one of the multiple receiving antennas 13 (in this embodiment, the receiving antennas RX1, RX2) respectively in each transceiving period within the frame time to receive the reflected signal That is, within one transceiving period, the switching circuit 161 of the selection circuit 16 only conducts/selects one transmitting antenna 12 (i.e. selects TX1 or TX2), that is, it interrupts the signal transmitted to other transmitting antennas by the transmitting circuit 11, and the switching circuit 162 of the selection circuit 16 only conducts/selects/uses one receiving antenna 13 (i.e. selects receiving antenna RX1 or RX2), that is, it interrupts the signal transmitted to the receiving circuit 14 by other receiving antennas. The transmitting antenna 12 (TX1 or TX2) and the receiving antenna 13 (RX1 or RX2) that are conducted/selected/used in this transceiving period form the transmission-reception combination.

For example, in Figure 5, a code "1" of a control signal TXSC for the transmitting antennas TX1, TX2 indicates that only the transmitting antenna TX1 is conducted/selected/used (the transmission signal is only transmitted via the transmitting antenna TX1 and the signal transmitted to the transmitting antenna TX2 by the transmitting circuit 11 is interrupted), and a code "2" indicates that only the transmitting antenna TX2 is conducted/selected/used (the transmission signal is only transmitted via the transmitting antenna TX2 and the signal transmitted to the transmitting antenna TX1 by the transmitting circuit 11 is interrupted). On the other hand, a code "1" of a control signal RXSC for the receiving antennas RX1, RX2 indicates that only the receiving antenna RX1 is conducted/selected/used (only the reflected signal received by the receiving antenna RX1 is received by the receiving circuit 14 and the signal transmitted to the receiving circuit 14 by the receiving antenna RX2 is interrupted), and a code "2" indicates that only the receiving antenna RX2 is conducted/selected/used (only the reflected signal received by the receiving antenna RX2 is received by the receiving circuit 14 and the signal transmitted to the receiving circuit 14 by the receiving antenna RX1 is interrupted). In this embodiment, it may be regarded that the selection of the transmitting antennas TX1 or TX2 is controlled by the control signal TXSC, and the selection of the receiving antennas RX1 or RX2 is controlled by the control signal RXSC, but in other embodiments, the selection of the transmitting antennas TX1 or TX2 and the selection of the receiving antennas RX1 or RX2 may also be controlled by the same control signal.

"TX1+RX1" represents a transmission-reception combination TRC of the transmitting antenna TX1 and receiving antenna RX1; "TX1+RX2" represents the transmission-reception combination TRC of the transmitting antenna TX1 and receiving antenna RX2; "TX2+RX1" represents the transmission-reception combination TRC of the transmitting antenna TX2 and receiving antenna RX1; and "TX2+RX2" represents the transmission-reception combination TRC of the transmitting antenna TX2 and receiving antenna RX2.

Moreover, the duration of the signal corresponding to any one code (e.g. "1" or "2") of the control signals TXSC, RXSC corresponds to the period of the detection signal. For example, two codes correspond to the detection signal TS1 of a triangular wave or the detection signal TS2 of a sawtooth wave. The switching time of two adjacent codes of the control signals TXSC, RXSC, for example, is located at the start point, end point, or terminal point of the period of the detection signals TS1, TS2. Alternatively, the switching time of two adjacent codes of the control signals TXSC, RXSC may also be located at the time point shifted forward or backward by a predetermined time from the start point, end point, or terminal point of the period of the detection signals TS1, TS2. As shown in Figure 2A or Figure 2B, the generation of the control signals is based on the detection signals of the frequency synthesizer 171 or the pulse generator 172, and the generation of the detection signals is based on the clock signal provided by the clock generator 19. Thus, the switching time point and period of the control signals may be synchronized with the clock signal.

In an embodiment, in the first operation mode, the frame time includes three transceiving periods. The three transceiving periods include the first transceiving period, the second transceiving period, and the third transceiving period. These transceiving periods correspond to multiple transmission-reception combinations TRC respectively. One transceiving period corresponds to one transmission-reception combination TRC. Based on one or more control signals TXSC, RXSC, the switching circuits 161, 162 of the selection circuit 16 select the transmitting antenna TX1 and the receiving antenna RX1 (corresponding to the transmission-reception combination TRC of "TX1+RX1") in the first transceiving period, select the transmitting antenna TX1 and the receiving antenna RX2, or select the transmitting antenna TX2 and the receiving antenna RX1 (corresponding to the transmission-reception combination TRC of "TX1+RX2" or "TX2+RX1") in the second transceiving period, and select the transmitting antenna TX2 and the receiving antenna RX2 (corresponding to the transmission-reception combination TRC of "TX2+RX2") in the third transceiving period. In other embodiments, according to requirements of component configuration, signal transmission, data computation, etc., the operation of the above three transceiving periods may also be rearranged in time sequence.

In this way, the transmitting antennas TX1, TX2 take turn in transmitting transmission signals in a time-division manner, and the receiving antennas RX1, RX2 take turn in receiving reflected signals in a time-division manner, thereby achieving an effect close to that of one transmitting antenna and three receiving antennas. There is only one path through the receiver during one transceiving duration, which can reduce the amount of current and the need for local oscillator phase correction. The symmetrical structure of dual transmitting antennas and dual receiving antennas can also reduce the size of the transceiver module, thereby making the overall system module more compact. Moreover, with the structure of this embodiment, more spatial information of external objects can be obtained, that is, spatial information of the external objects can be more accurately determined. For example, for multiple different external objects at the same distance from the receiving antenna at the same time point, the number of external objects that can be distinguished with the structure of this embodiment structure can be increased.

In another embodiment, each transceiving period may be half a period of the detection signal TS1 (i.e. corresponding to an ascending or descending section of a triangular wave) or a period of the detection signal TS2 (i.e. corresponding to a sawtooth wave). For example, in Figure 5, the control signals TXSC, RXSC at the lowest part of the drawing are switched to another set of transmission-reception combinations for each period of the detection signal TS2. One frame period includes four transceiving periods. For example, the first transceiving period, the second transceiving period, the third transceiving period, and the fourth transceiving period arranged in time sequence. Based on one or more control signal, the switching circuits 161, 162 of the selection circuit 16 select the transmitting antenna TX1 and the receiving antenna RX1 (corresponding to the transmission-reception combination TRC of "TX1+RX1") in the first transceiving period, select the transmitting antenna TX1 and the receiving antenna RX2 (corresponding to the transmission-reception combination TRC of "TX1+RX2") in the second transceiving period, select the transmitting antenna TX2 and the receiving antenna RX1 (corresponding to the transmission-reception combination TRC of "TX2+RX1") in the third transceiving period, and select the transmitting antenna TX2 and the receiving antenna RX2 (corresponding to the transmission-reception combination TRC of "TX2+RX2") in the fourth transceiving period.

However, the transceiving period and the period of the detection signal may also have other ratios.

In an embodiment, within one frame time, multiple transmission-reception combinations executed at different times (e.g. different transceiving periods) based on one or more control signals correspond to multiple time-division reflected signals. "Time-division" means that the receiving antennas TX1, TX2 take turn in receiving reflected signals "in time-division manner" at different times. The time-division reflected signal includes the reflected signals received at different times (e.g. different transceiving periods) in this frame time. For example, in Figure 5, one frame time includes four transceiving periods (corresponding to the lowest control signals TXSC, RXSC), and the reflected signal received at any transceiving period is referred to a time-division reflected signal.

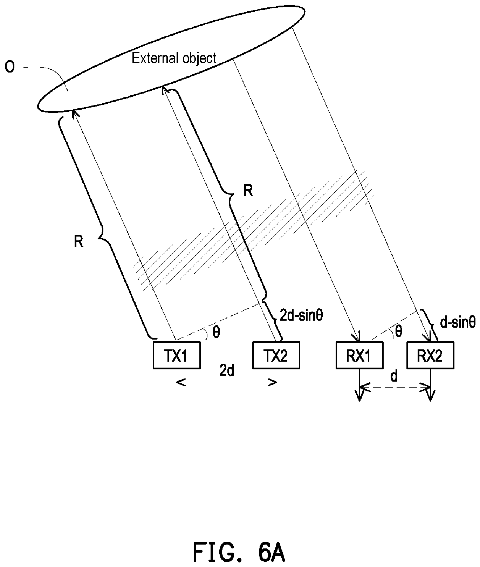

In an embodiment, the phase differences between at least two sets of two adjacent time-division reflected signals in time sequence in these time-division reflected signals are equal. Specifically, Figure 6A is a schematic diagram of the antenna configuration, transmission angle, and Angle of Arrival according to an embodiment of the disclosure. Please refer to Figures 4A and 6A. The transmitting antenna TX1, the transmitting antenna TX2, receiving antenna RX1, and receiving antenna RX2 are arranged in a row in the same direction (e.g. the horizontal direction of the diagram) in space, the spacing L1 in Figure 4A is a distance 2d in Figure 6A, and the spacing L2 in Figure 4A is the distance d in Figure 6A. That is, the spacing L1 is twice the spacing L2. Thus, the distance between the transmitting antenna TX1 and the transmitting antenna TX2 to an (external) object O differs by $2d\sin\theta$, and the distance between the external object O to the receiving antenna RX1 and the receiving antenna RX2 differs by $d\sin\theta$. The Angle of Arrival $\theta$ is the angle of the external object O relative to the radar apparatuses 10, 20, 30.

The two transmitting antennas TX1, TX2 and the two receiving antennas RX1, RX2 may form four types of transmission-reception combinations, each transmission-reception combination includes a combination of one of the two transmitting antennas TX1, TX2 and one of the two receiving antennas RX1, RX2, such as "TX1+RX1", "TX1+RX2", "TX2+RX1" and "TX2+RX2" as shown in Figure 5.

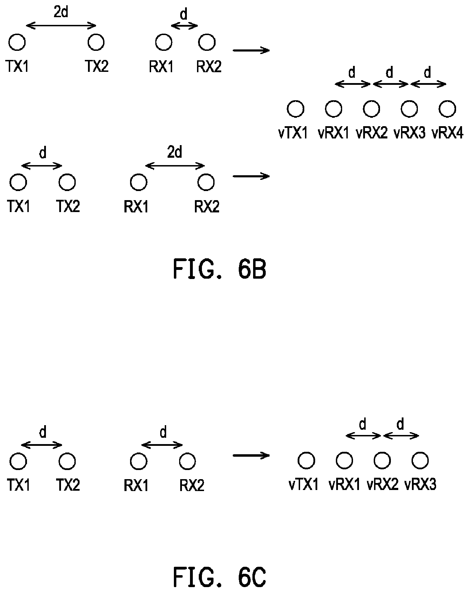

The time-division reflected signals received in different transceiving periods have distance differences, as shown by $d\sin\theta$ in Figure 6A. This distance difference may form a kind of virtual antenna configuration. Figure 6B is a schematic diagram of the antenna configuration and equivalent virtual antenna according to an embodiment of the disclosure. Please refer to Figure 6B. If the spacing L1 (e.g. distance 2d) between the two transmitting antennas TX1, TX2 is twice the spacing L2 (e.g. distance d) between the two receiving antennas RX1, RX2, or the spacing L2 (e.g. distance 2d) between the two receiving antennas RX1, RX2 is twice the spacing L1 (e.g. distance d) between the two transmitting antennas TX1, TX2, then these transmitting antennas TX1, TX2 and receiving antennas RX1, RX2 are equivalent to a virtual transmitting antenna vTX1, a virtual receiving antenna vRX1, a virtual receiving antenna vRX2, a virtual receiving antenna vRX3, and a virtual receiving antenna vRX4 arranged in the same direction (e.g. the horizontal direction of the diagram), and there is a first virtual spacing (e.g. distance d) between the virtual receiving antenna vRX1 and the virtual receiving antenna vRX2, there is a second virtual spacing (e.g. distance d) between the virtual receiving antenna vRX2 and the virtual receiving antenna vRX3, and there is a third virtual spacing (e.g. distance d) between the virtual receiving antenna vRX3 and the virtual receiving antenna vRX4. Moreover, the first virtual spacing, the second virtual spacing, and the third virtual spacing are equal, for example, they are all distance d. The distance d may be half the wavelength of the detection signal, but is not limited thereto.

Thus, at a first time (e.g. the first transceiving period), the time-division reflected signal from the virtual transmitting antenna vTX1 to the virtual receiving antenna vRX1 has a phase in terms of distance. At a second time (e.g. the second transceiving period), the transmission distance of the time-division reflected signal from the virtual transmitting antenna vTX1 to the virtual receiving antenna vRX2 is one distance $d\sin\theta$ more than the transmission distance of the time-division reflected signal at the first time. The phases of the two time-division reflected signals differ $\frac{2\pi}{\lambda}d\sin\theta$ Similarly, at a third time (e.g. the third transceiving period), the transmission distance of the time-division reflected signal from the virtual transmitting antenna vTX1 to the virtual receiving antenna vRX3 is one distance $d\sin\theta$ more than the

transmission distance of the time-division reflected signal at the second time; and at a fourth time (e.g. the fourth transceiving period), the transmission distance of the time-division reflected signal from the virtual transmitting antenna vTX1 to the virtual receiving antenna vRX4 is one distance dsinθ more than the transmission distance of the time-division reflected signal at the third time. Thus, the phase difference between two adjacent time-division reflected signals in time sequence in the four time-division reflected signals received at four times (e.g. four transceiving periods) is $\frac{2\pi}{\lambda} dsin\theta$. The phase difference of these adjacent time-division reflected signals may be defined as a vector a(θ) of a Uniform Linear Array (ULA):

$$\text{a}(\theta) = \begin{bmatrix} 1 & e^{-j\frac{2\pi}{\lambda}dsin\theta} & e^{-j\frac{2\pi}{\lambda}2dsin\theta} & e^{-j\frac{2\pi}{\lambda}3dsin\theta} \end{bmatrix}\text{... (3)}.$$

Further, when the spacing L1 (e.g. 2d) between the two transmitting antennas TX1, TX2 is twice the spacing L2 (e.g. d) between the two receiving antennas RX1, RX2, the ratio of the distance difference (e.g. dsinθ) between the distances at which at least two sets of two adjacent time-division reflected signals in time sequence in these time-division reflected signals arrive at corresponding virtual receiving antennas is sinθ with respect to the spacing L2 (e.g. d) between the two receiving antennas RX1, RX2. Alternatively, when the spacing L2 (e.g. 2d) between the two receiving antennas RX1, RX2 is twice the spacing L1 (e.g. d) between the two transmitting antennas TX1, TX2, the ratio of the distance difference (e.g. dsinθ) between the distances at least two sets of two adjacent time-division reflected signals in time sequence in these time-division reflected signals arrive at corresponding virtual receiving antennas of is sinθ with respect to the spacing L1 (e.g. d) between the two transmitting antennas TX1, TX2. Moreover, the Angle of Arrival θ is the angle of the external object relative to the radar apparatuses 10, 20, 30.

Figure 6C is a schematic diagram of the antenna configuration and equivalent virtual antennas according to another embodiment of the disclosure. Please refer to Figures 4A and 6C. If the spacing L1 (e.g. distance d) between the two transmitting antennas TX1, TX2 is the same as the spacing L2 (e.g. distance d) between the two receiving antennas RX1, RX2, then these transmitting antennas TX1, TX2 and receiving antennas RX1, RX2 are equivalent to the virtual transmitting antenna vTX1, the virtual receiving antenna vRX1, the virtual receiving antenna vRX2, and the virtual receiving antenna vRX3 arranged in the same direction (e.g. the horizontal direction of the diagram), and there is a first virtual spacing (e.g. distance d) between the virtual receiving antenna vRX1 and the virtual receiving antenna vRX2, and a second virtual spacing (e.g. distance d) between the virtual receiving antenna vRX2 and the virtual receiving antenna vRX3. Moreover, the first virtual spacing and the second virtual spacing are equal, for example, both are distance d. The distance d may be half the wavelength of the detection signal, but is not limited thereto.

Similarly, at the first time (e.g. the first transceiving period), the time-division reflected signal from the virtual transmitting antenna vTX1 to the virtual receiving antenna vRX1 has a phase in terms of distance. At the second time (e.g. the second transceiving period), the transmission distance of the time-division reflected signal from the virtual transmitting antenna vTX1 to the virtual receiving antenna vRX2 is one distance dsinθ more than the transmission distance of the time-division reflected signal at the first time. At the third time (e.g. the third transceiving period), the transmission distance of the time-division reflected signal from the virtual transmitting antenna vTX1 to the virtual receiving antenna vRX3 is one distance dsinθ more than the transmission distance of the time-division reflected signal at the second time. Thus, the phase difference between two adjacent time-division reflected signals in time sequence in the three time-division reflected signals received at three times (e.g. three transceiving periods) is $\frac{2\pi}{\lambda} dsin\theta$. The phase difference of these adjacent time-division reflected signals may be defined as a vector a2(θ) of a Uniform Linear Array:

$$\text{a2}(\theta) = \begin{bmatrix} 1 & e^{-j\frac{2\pi}{\lambda}dsin\theta} & e^{-j\frac{2\pi}{\lambda}2dsin\theta} \end{bmatrix}\text{...(4)}.$$

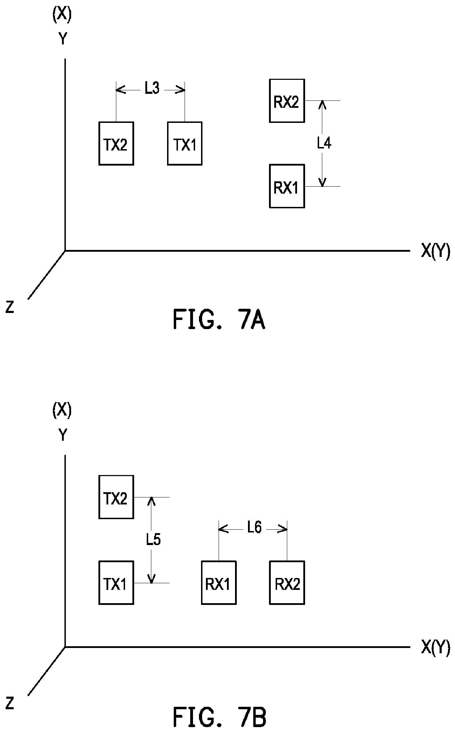

Figure 7A is a schematic diagram of the antenna configuration according to the third embodiment of the disclosure. Please refer to Figure 7A. The multiple transmitting antennas 12 include the two transmitting antennas TX1, TX2 located in the X-Y/Y-X plane. There is a spacing L3 (e.g. half the wavelength or the same as the wavelength of the detection signal, but not limited thereto) between the two transmitting antennas TX1, TX2. The multiple receiving antennas 13 include the two receiving antennas RX1, RX2 located in the X-Y/Y-X plane. There is a spacing L4 (e.g. half the wavelength or the same as the wavelength of the detection signal, but not limited thereto) between the two receiving antennas RX1, RX2. The transmitting antennas TX1, TX2 are arranged in the direction parallel to the X-axis of the X-Y plane or parallel to the Y-axis of the Y-X plane. The receiving antennas RX1, RX2 are arranged in the direction parallel to the Y-axis of the X-Y plane or parallel to the X-axis of the Y-X plane. That is, the transmitting antennas TX1, TX2 and the receiving antennas RX1, RX2 are arranged in mutually perpendicular directions. In the embodiment of Figure 7A, the receiving antennas RX1, RX2 are not aligned with the transmitting antennas TX1 or TX2, so the transmitting antennas TX1, TX2 and the receiving antennas RX1, RX2 are arranged in a T-shape, for example.

Figure 7B is a schematic diagram of the antenna configuration according to the fourth embodiment of the disclosure. Please refer to Figure 7B. The multiple transmitting antennas 12 include the two transmitting antennas TX1, TX2 located in the X-Y/Y-X plane. There is a spacing L5 (e.g. half the wavelength or the same as the wavelength of the detection signal, but not limited thereto) between the two transmitting antennas TX1, TX2. The multiple receiving antennas 13 include the two receiving antennas RX1, RX2 located in the X-Y/Y-X plane. There is a spacing L6 (e.g. half the wavelength or the same as the wavelength of the detection signal, but not limited thereto) between the two receiving antennas RX1, RX2. The transmitting antennas TX1, TX2 are arranged in the direction parallel to the Y-axis of the X-Y plane or parallel to the X-axis of the Y-X plane. The receiving antennas RX1, RX2 are arranged in the direction parallel to the X-axis of the X-Y plane or parallel to the Y-axis of the Y-X plane. That is, the transmitting antennas TX1, TX2 and the receiving antennas RX1, RX2 are arranged in mutually perpendicular directions. In the embodiment of Figure 7B, the receiving antennas RX1, RX2 may be arranged in the same direction as the transmitting antenna TX1, so the transmitting antennas TX1, TX2 and the receiving antennas RX1, RX2 are arranged in an L-shape, for example.

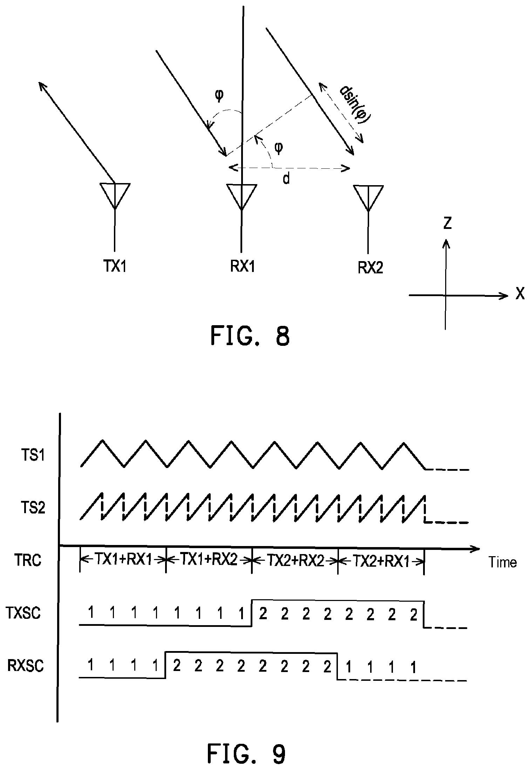

Figure 8 is a schematic diagram of the antenna configuration, transmission angle, and Angle of Arrival according to an embodiment of the disclosure. Please refer to Figure 8. The radar apparatuses 20, 30 may transmit transmission signals to an external object (also known as target) via the transmitting antenna TX1. Receiving antennas RX1, RX2 receive reflected signals reflected from the external object. Assuming that on the X-Z plane, there is a distance d (e.g. half the wavelength of the detection signal) between the two receiving antennas RX1, RX2, in which compared to the receiving antenna RX1, the receiving antenna RX2 is further away from the transmitting antenna TX1. Thus, a round-trip distance from the transmitting antenna TX1 to the receiving antenna RX1 via the external object is different from a round-trip distance from the transmitting antenna TX1 to the receiving antenna RX2 via the external object by dsinφ. The distance difference of dsinφ will be reflected in the phase difference between the reflected signals of the two receiving antennas RX1, RX2, and the Angle of Arrival φ may be estimated accordingly. That is, compared to the antenna configuration of Figures 4A and 4B, with the antenna configuration of Figures 7A and 7B, position information in another dimension (e.g. distance, azimuth (i.e. Angle of Arrival φ)) can be sensed.

Figure 9 is a schematic diagram of the periods of the detection signals TS1, TS2 and antenna switching according to an embodiment of the disclosure. Please refer to Figure 9. The detection signal is, for example, a continuous wave signal, and is expressed as a chirp signal, in which the detection signal TS1 in the example is a triangular wave. Alternatively, another example of the detection signal TS2 is a sawtooth wave. One frame time includes four transceiving periods. Each transceiving period may, for example, include two periods of the detection signal TS1, or it may include four periods of the detection signal TS2.

Similarly, based on one or more control signals, the switching circuits 161, 162 of the selection circuit 16 are configured to select only one of the multiple transmitting antennas 12 (in this embodiment, the transmitting antennas TX1, TX2) respectively in each transceiving period within the frame time to transmit transmission signals and to select only one of the multiple receiving antennas 13 (in this embodiment, the receiving antennas RX1, RX2) respectively in each transceiving period within the frame time to receive reflected signals. That is, within one transceiving period, the switching circuit 161 of the selection circuit 16 only conducts/selects one transmitting antenna 12 (i.e. selects TX1 or TX2), that is, it interrupts the signal transmitted to other transmitting antennas by the transmitting circuit 11, and the switching circuit 162 of the selection circuit 16 only conducts/selects/uses one receiving antenna 13 (i.e. selects receiving antenna RX1 or RX2), that is, it interrupts the signal transmitted to the receiving circuit 14 by other receiving antennas. The transmitting antenna 12 (TX1 or TX2) and the receiving antenna 13 (RX1 or RX2) that are conducted/selected/used in this transceiving period form the transmission-reception combination.

In an embodiment, in the second operation mode, the frame time includes four transceiving periods. These four transceiving periods include the first transceiving period, the second transceiving period, the third transceiving period, and the fourth transceiving period. These transceiving periods correspond to multiple transmission-reception combinations TRC respectively. One transceiving period corresponds to one transmission-reception combination TRC. Based on one or more control signals TXSC, RXSC, the switching circuits 161, 162 of the selection circuit 16 select the transmitting antenna TX1 and the receiving antenna RX1 (corresponding to the transmission-reception combination TRC of "TX1+RX1") in the first transceiving period, select the transmitting antenna TX1 and the receiving antenna RX2 (corresponding to the transmission-reception combination TRC of "TX1+RX2") in the second transceiving period, select the transmitting antenna TX2 and the receiving antenna RX2 (corresponding to the transmission-reception combination TRC of "TX2+RX2") in the third transceiving period, and select the transmitting antenna TX2 and the receiving antenna RX1 (corresponding to the transmission-reception combination TRC of "TX2+RX1") in the fourth transceiving period. In other embodiments, according to requirements of component configuration, signal transmission, data computation, etc. the operation of the above four transceiving periods may also be rearranged in time sequence.

In this way, the transmitting antennas TX1, TX2 take turn in transmitting transmission signals in a time-division manner, and the receiving antennas RX1, RX2 take turn in receiving reflected signals in a time-division manner, thereby achieving the effect of one transmitting antenna and four receiving antennas.

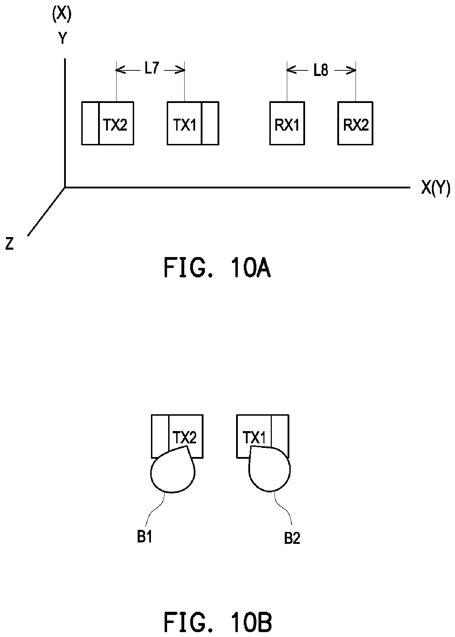

Figure 10A is a schematic diagram of the antenna configuration according to the fifth embodiment of the disclosure. Please refer to Figure 10A. The multiple transmitting antennas 12 include the two transmitting antennas TX1, TX2 located in the X-Y/Y-X plane. There is a spacing L7 (e.g. half the wavelength or the same as the wavelength of the detection signal, but not limited thereto) between the two transmitting antennas TX1, TX2. The multiple receiving antennas 13 include the two receiving antennas RX1, RX2 located in the X-Y/Y-X plane. There is a spacing L8 (e.g. half the wavelength or the same as the wavelength of the detection signal, but not limited thereto) between the two receiving antennas RX1, RX2. The transmitting antennas TX1, TX2 and the receiving antennas RX1, RX2 are both arranged in the direction parallel to the X-axis of the X-Y plane or parallel to the Y-axis of the Y-X plane. That is, the transmitting antennas TX1, TX2 and the receiving antennas RX1, RX2 are arranged in the same direction. Compared with the transmitting antenna TX2, the transmitting antenna TX1 is closer to the receiving antennas RX1, RX2; and, compared with the receiving antenna RX2, the receiving antenna RX1 is closer to the transmitting antennas TX1, TX2. In the direction parallel to the Y-axis of the X-Y plane or parallel to the X-axis of the Y-X plane, the distance between the transmitting antennas TX1/TX2 and the receiving antennas RX1/RX2 is zero (i.e. arranged along an imaginary straight line parallel to the X-axis of the X-Y plane or parallel to the Y-axis of the Y-X plane). In an embodiment, the spacing L7 is twice the spacing L8. In other embodiments, depending on the needs of the usage context, the spacing L7 and the spacing L8 may also be in other ratios.

The difference from the embodiment in Figure 4A is that Figure 10B is a schematic diagram of the radiation pattern of Figure 10A. Please refer to Figure 10B. A beam pattern B1 formed by the transmitting antenna TX1 is different from a beam pattern B2 formed by the transmitting antenna TX2. As shown in the diagram, the beam pattern B1 is slightly towards the lower left of the drawing, and the beam pattern B2 is slightly towards the lower right of the drawing. However, the shape and direction of the beam pattern may still be adjusted according to actual needs.

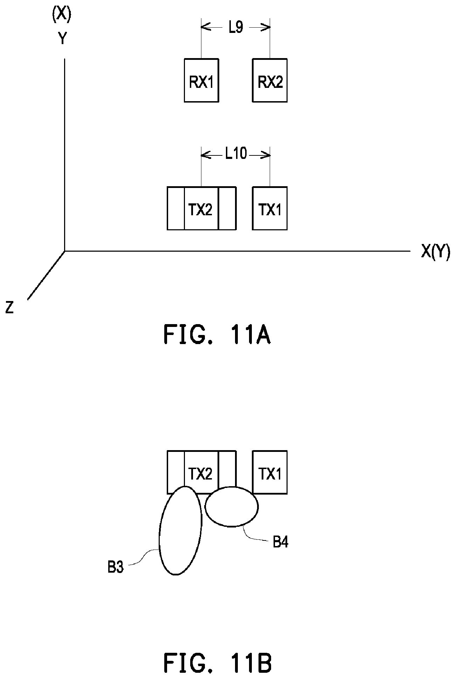

Figure 11A is a schematic diagram of the antenna configuration according to the sixth embodiment of the disclosure. Please refer to Figure 11A. The multiple receiving antennas 13 include the two receiving antennas RX1, RX2 located in the X-Y/Y-X plane. There is a spacing L9 (e.g. half the wavelength or the same as the wavelength of the detection signal, but not limited thereto) between the two receiving antennas RX1, RX2. The multiple transmitting antennas 12 include the two transmitting antennas TX1, TX2 located in the X-Y/Y-X plane. There is a spacing L10 (e.g. half the wavelength or the same as the wavelength of the detection signal, but not limited thereto) between the two transmitting antennas TX1, TX2. The transmitting antennas TX1, TX2 and receiving antennas RX1, RX2 are both arranged in the direction parallel to the X-axis of the X-Y plane or parallel to the Y-axis of the Y-X plane. In the direction parallel to the Y-axis of the X-Y plane or parallel to the X-axis of the Y-X plane, there is a spacing (which may be defined according to the designer's needs) between the transmitting antennas TX1/TX2 and the receiving antennas RX1/RX2. In other words, the distance between the transmitting antennas TX1/TX2 and the receiving antennas RX1/RX2 may be greater than zero. As shown in Figure 11A, compared to the transmitting antennas TX1/TX2, the antennas RX1/RX2 are, for example, further away from the X-axis of the X-Y plane or the Y-axis of the Y-X plane. In an embodiment, the spacing L10 is twice the spacing L9. In other embodiments, depending on the needs of the usage context, the spacing L9 and the spacing L10 may also be in other ratios.

The difference from the embodiment in Figure 4A is that Figure 11B is a schematic diagram of the radiation pattern of Figure 11A. Please refer to Figure 11B. Beam patterns B3, B4 formed by the transmitting antenna TX1 are different from the beam pattern (e.g. omnidirectional) formed by the transmitting antenna TX2. As shown in the diagram, the beam pattern B3 is slightly towards the lower left of the drawing, and the beam pattern B3 is slender and long, covering a farther and narrower range. The beam pattern B4 is slightly towards the right of the drawing, and the beam pattern B4 is flat and fat, covering a closer and wider range. However, the shape and direction of the beam pattern may still be adjusted according to actual needs.

It should be noted that Figures 10A and 11A may be applied to the second operation mode shown in Figure 9, which will not be further elaborated here. In this way, the diversity of radiation patterns can be achieved.

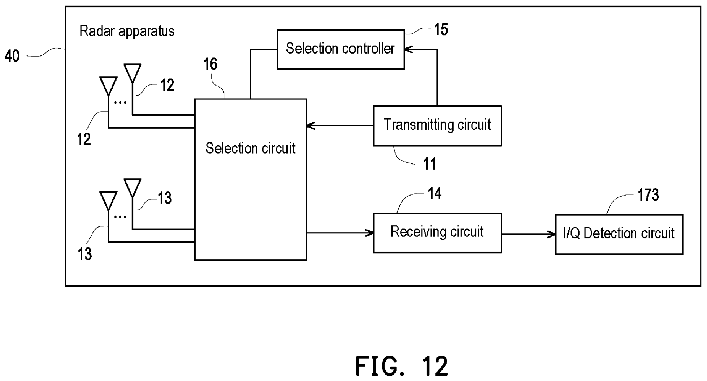

Figure 12 is a component block diagram of a radar apparatus 40 according to an embodiment of the disclosure. Please refer to Figure 12. The difference between it and the radar apparatus 10 in Figure 1 is that the radar apparatus 40 further includes an I/Q (In-phase/Quadrature) detection circuit 173. The detection circuit 173 is coupled to the receiving circuit 14. For example, the detection circuit 173 may receive the baseband signal DO output by the analog-to-digital converter ADC in the receiving circuit 14 of Figure 2A or Figure 2B.

The intermediate frequency signals (e.g. the output signals of the mixer RXMIX in Figure 2A or Figure 2B) obtained respectively via two receiving antennas 13 (e.g. the receiving antennas RX1, RX2 in Figure 2A or Figure 2B) have frequencies $f_{IF1}=f_{IF2}=|f_{RF}-f_{LO}|$ and the phases are respectively $\angle\phi_{IF1} = |\angle\phi_{RF1} - \angle\phi_{LORX}|$ and $\angle\phi_{IF2} = |\angle\phi_{RF2} - \angle\phi_{LORX}|$, in which $\angle\phi_{IF1} = \angle(\phi_{LORX} +/-\phi_{IF})$ and $\angle\phi_{IF2} = \angle(\phi_{LORX} +/-\phi_{RF})$. $f_{IF1}$ is the frequency of the intermediate frequency signal corresponding to the receiving antenna RX1, $f_{IF2}$ is the frequency of the intermediate frequency signal corresponding to the receiving antenna RX2, $f_{RF}$ is the frequency of the radio frequency signal, $f_{LO}$ is the frequency of the detection signal, $\angle\phi_{IF1}$ is the phase of the intermediate frequency signal corresponding to the receiving antenna RX1, $\angle\phi_{IF2}$ is the phase of the intermediate frequency signal corresponding to the receiving antenna RX2, $\angle\phi_{RF1}$ is the phase of the radio frequency signal corresponding to the receiving antenna RX1, $\angle\phi_{RF2}$ is the phase of the radio frequency signal corresponding to the

receiving antenna RX2, $\angle\phi_{LORX}$ is the phase of the detection signal, $\angle\phi_{RF}$ is the phase of the radio frequency signal, and $\angle\phi_{IF}$ is the phase of the intermediate frequency signal (optionally, it may be ignored in the detection at relatively short distance). Then, the detection circuit 173 may determine the phase information of the intermediate frequency signal by another down-conversion with another I/Q format. Alternatively, for FMCW signals, phase information may be obtained based on time delay by performing a Fast Fourier Transform.

It is worth noting that the phase errors of the transmitting antennas TX1/TX2 and receiving antennas RX1/RX2 may be measured via existing intermediate frequency self-leakage (IF self-leakage) measurements, and these phase errors may be stored for phase error compensation. For example, in Figure 2A, the leakage is simulated via the loopback structure of the receiving end, and the intermediate frequency signal output by the mixer RXMIX is corrected using a sine wave signal corresponding to the phase of the leakage via the correction circuit IFA-2, so as to reduce phase errors.

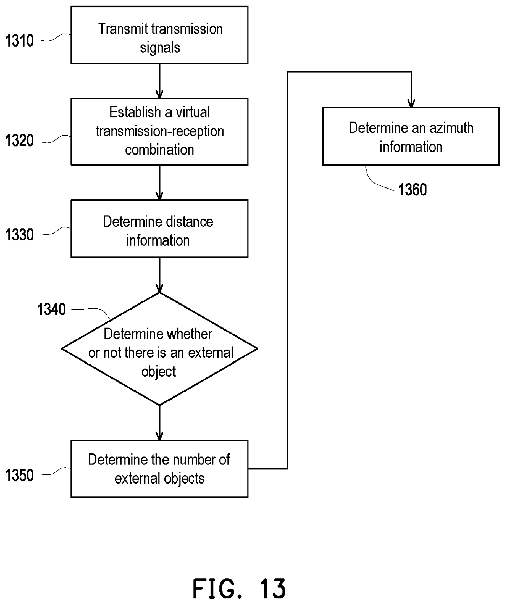

Figure 13 is a flowchart of determining spatial information according to an embodiment of the disclosure. Please refer to Figure 13. The radar apparatuses 10, 20, 30, 40 may transmit transmission signals (step 1310). According to the antenna configuration and corresponding operation modes (e.g. the first operation mode and second operation mode) in Figures 4A, 4B, 7A, 7B, 10A, and 11A, select the transmitting antenna 12 in the corresponding transmission-reception combination to transmit transmission signals, select the receiving antenna 13 in the corresponding transmission-reception combination to receive reflected signals, and establish a virtual transmission-reception combination accordingly (step 1320). The virtual transmission-reception combination, for example, is the combination of the virtual transmitting antenna vTX1 and the virtual receiving antennas vRX1-vRX4 or the virtual receiving antennas vRX1-vRX3 shown in Figures 6B and 6C. That is, via the physical two transmitting antennas TX1, TX2 and two receiving antennas RX1, RX2 combined with multiple time-division transmission-reception combinations, a virtual transmission-reception combination of one virtual transmitting antenna and four virtual receiving antennas, or a virtual transmission-reception combination of one virtual transmitting antenna and three virtual receiving antennas is achieved.

Next, the radar apparatuses 10, 20, 30, 40 may convert each time-division reflected signal into spectrum information to determine distance information (step 1330). Different radio frequency signals may be generated for time-division reflected signals corresponding to different transceiving durations, and the receiving circuit 14 may generate corresponding internal signals (e.g. the baseband signal DO) based on the detection signal and these different radio frequency signals.

For example, in a frame that includes four transceiving periods, the receiving circuit 14 may generate a first internal signal corresponding to the first transceiving period, the receiving circuit 14 may generate a second internal signal corresponding to the second transceiving period, the receiving circuit 14 may generate a third internal signal corresponding to the third transceiving period, and the receiving circuit 14 may generate a fourth internal signal corresponding to the fourth transceiving period.

For example, in a frame that includes three transceiving periods, the receiving circuit 14 may generate a first internal signal corresponding to the first transceiving period, the receiving circuit 14 may generate a second internal signal corresponding to the second transceiving period, and the receiving circuit 14 may generate a third internal signal corresponding to the third transceiving period.

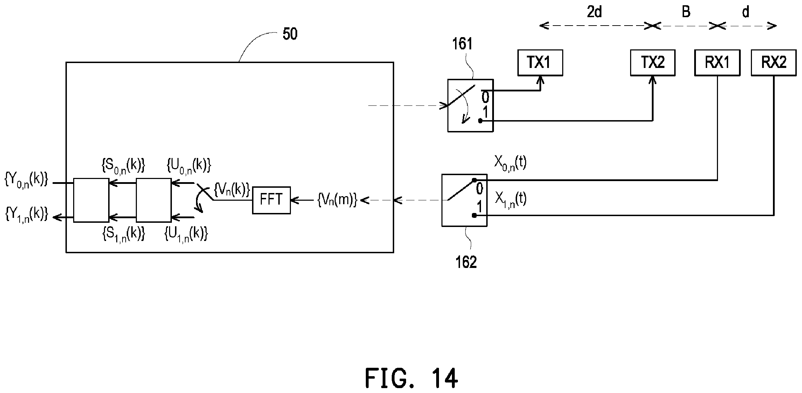

Figure 14 is a schematic diagram of signal processing according to an embodiment of the disclosure. Please refer to Figure 14. The radar apparatuses 10-40 may further include a computing processor 50. The computing processor 50 may be coupled to the receiving circuit 14 of Figure 1, Figure 2A or Figure 2B. For example, in Figures 2A and 2B, the computing processor 50 is coupled to the analog-to-digital converter ADC in the receiving circuit 14 and receives the baseband signal DO. The computing processor 50 may be a chip, a processor, a microcontroller, an Application-Specific Integrated Circuit (ASIC), or any type of digital circuit. It should be noted that in Figure 14, the transmitting circuit 11 is omitted between the switching circuit 161 and the computing processor 50, and the receiving circuit 14 is omitted between the switching circuit 162 and the computing processor 50. $X_{0,n}(t)$ is the reflected signal (time domain) received by the receiving antenna RX1, $X_{1,n}(t)$ is the reflected signal (time domain) received by the receiving antenna RX2, $v_n(m)$ is the baseband signal (time domain) (i.e. internal signal), FFT represents Fast Fourier Transform, and $V_n(k)$ is the baseband signal (frequency domain). Moreover, $u_{0,n}(k)$ is the baseband signal (frequency domain) corresponding to the receiving antenna RX1, and $u_{1,n}(k)$ the baseband signal (frequency domain) corresponding to the receiving antenna RX2. The computing processor 50 performs high-pass filtering on the baseband signals $u_{0,n}(k)$ and $u_{1,n}(k)$, respectively, so as to obtain the baseband signals $S_{0,n}(k)$ and $S_{1,n}(k)$ of the positive frequency part ($0<\omega<\pi$). Then, the computing processor 50 performs conjugate operation, multiplication, and linear combination on the baseband signals $S_{0,n}(k)$ and $S_{1,n}(k)$, to obtain evaluation signals $Y_{0,n}(k)$ and $Y_{1,n}(k)$.

In an embodiment, for a frame that includes four transceiving periods (i.e. corresponding to four time-division transmission-reception combinations), the computing processor 50 may determine the spatial information of an external object based on the first internal signal, the second internal signal, the third internal signal, and the fourth internal signal. In another embodiment, for a frame that includes three transceiving periods (i.e. corresponding to three time-division transmission-reception combinations), the computing processor 50 may determine the spatial information of an external object based on the first internal signal, the second internal signal, and the third internal signal.

In an embodiment, the spatial information of the external object includes distance information. The computing processor 50 may obtain the spectrum information of the baseband signal DO corresponding to different internal signals via Fast Fourier Transform, Discrete Fourier Transform (DFT), or other time-domain to frequency-domain transformations. The amplitude of the spectrum information corresponds to the distance information. Take power spectrogram as an example of spectrum information, assuming that the reflected signal is obtained via reflection by an external object, then each internal signal has a peak at the position of this external object (or the distance to this external object).

Take the example of four transmission-reception combinations, if there are K external objects (K is a positive integer) located at the same position (i.e. the same beat frequency, and the frequency where the beat frequency is located is the peak position in the spectrum), then the evaluation signals $Y_{0,t1}(e^{j\omega(B)})$, $Y_{1,t2}(e^{jw(B)})$, $Y_{0,t3}(e^{j\omega(B)})$, $Y_{1,t4}(e^{j\omega(B)})$ obtained from the internal signals corresponding to the four transmission-reception combinations are sequentially subject to time-domain to frequency-domain transformation (e.g. Discrete or Fast Fourier Transform), conjugate operation, product, and linear combination are respectively:

$$Y_{0,t1}\left(e^{j\omega^{(B)}}\right) = \sum_{1 \le i \le K} \frac{A_i^2}{R^2} \cdot \left|H_0\left(\omega - \omega^{(B)}\right)\right|^2 \cdot |E(\theta_i)|^2 + N_0\left(e^{j\omega^{(B)}}\right)...(5)$$

$$Y_{1,t2}\left(e^{j\omega^{(B)}}\right) = \sum_{1 \le i \le K} \frac{A_i^2}{R^2} \cdot \left|H_1\left(\omega - \omega^{(B)}\right)\right|^2 \cdot |E(\theta_i)|^2 \cdot e^{-j\frac{2\pi}{\lambda}d \cdot \sin\theta_i} + N_1\left(e^{j\omega^{(B)}}\right)\ ...(6)$$

$$Y_{0,t3}\left(e^{j\omega^{(B)}}\right) = \sum_{1 \le i \le K} \frac{A_i^2}{R^2} \cdot \left|H_0\left(\omega - \omega^{(B)}\right)\right|^2 \cdot |E(\theta_i)|^2 \cdot e^{-j\frac{2\pi}{\lambda}2d \cdot \sin\theta_i} + N_0\left(e^{j\omega^{(B)}}\right)...(7)$$

$$Y_{1,t4}\left(e^{j\omega^{(B)}}\right) = \sum_{1 \le i \le K} \frac{A_i^2}{R^2} \cdot \left|H_0\left(\omega - \omega^{(B)}\right)\right|^2 \cdot |E(\theta_i)|^2 \cdot e^{-j\frac{2\pi}{\lambda}3d \cdot \sin\theta_i} + N_1\left(e^{j\omega^{(B)}}\right)...(8),$$

where $\omega^{(B)}$ is the beat frequency (assuming the same distance, so the value is the same). A is an amplitude related to the reflection power of the external object, R is a distance between the external object and the transmitting antenna 12 or the receiving antenna 13 (which may be used as distance information, as shown in Figure 6A), $\theta$ is an angle of the external object relative to the receiving antenna 13, $H_0(\omega)$ and $H_1(\omega)$ are $e^{\frac{j(M-1)}{2}} \cdot \frac{\sin M}{\sin \omega}$, M is the number of sampled signals within a period of a detection signal, $E(\theta)$ is the corresponding parameter of the radiation pattern of an antenna beam, $N_0$ and $N_1$ are noises, $Y_{0,t1}$ is the internal signal obtained via the receiving antenna RX1 in a transceiving period t1, $Y_{0,t2}$ is an internal signal obtained via the receiving antenna RX2 in a transceiving period t2, $Y_{0,t3}$ is an internal signal obtained via the receiving antenna RX1 in a transceiving period t3, and $Y_{0,t4}$ is an internal signal obtained via the receiving antenna RX2 in a transceiving period t4.

The above formulas (5) to (8) may be converted into a matrix form:

$$y = \sum_{1 \le i \le K} G_i \cdot a(\theta_i) + n_i = [a(\theta_1) \quad \cdots \quad a(\theta_K)] \cdot \begin{bmatrix} G_1 \\ \vdots \\ G_K \end{bmatrix} + \begin{bmatrix} n_1 \\ \vdots \\ n_K \end{bmatrix}...(9),$$

where $G_i \triangleq \frac{A_i^2}{R^2} \cdot \left|H_0\left(\omega - \omega^{(B)}\right)\right|^2 \cdot |E(\theta_i)|^2$, and

$$a(\theta) = \left(1 \quad e^{-j\frac{2\pi}{\lambda}d \cdot \sin\theta} \quad e^{-j\frac{2\pi}{\lambda}2d \cdot \sin\theta} \quad e^{-j\frac{2\pi}{\lambda}3d \cdot \sin\theta}\right)^T$$, and n is the noise.

In this way, the computing processor 50 may estimate a distance R and obtain the distance information accordingly. Moreover, since the method of this embodiment sets the phase differences between at least two sets of two adjacent time-division reflected signals in time sequence in the time-division reflected signals to be equal, the computation can be made more concise and convenient, reducing the computation time of the computing processor 50 and improving the efficiency of the radar apparatuses 10 to 40.

On the other hand, the computing processor 50 may determine whether or not there is an external object by setting an amplitude threshold (step 1340), and determine the number of external objects accordingly (step S1350). In an embodiment, the number of one or more external objects may be determined based on the spectrum information. Take power spectrogram as an example of spectrum information, if the peak corresponding to any distance is greater than the amplitude threshold, it is determined that there is an external object. Determine respectively whether the peaks corresponding to different distances are greater than the amplitude threshold, and count the number of all peaks that are greater than the amplitude threshold. The number of these peaks that are greater than the amplitude threshold may be used as the number of external objects.

Moreover, the computing processor 50 may convert multiple time-division reflected signals into spatial spectrum information so as to determine azimuth information (step 1360). A peak in the spatial spectrum information corresponds to the azimuth information, and the spatial information includes the azimuth information. The azimuth information is, for example, the Angle of Arrival $\theta$ or Angle of Arrival $\varphi$ as described above. Take formula (9) as an example, the covariance matrix may be expressed as:

$$R_{yy} \triangleq E\{y \cdot y^H\}$$

$$= E\left\{\left([a(\theta_1) \quad \cdots \quad a(\theta_K)] \cdot \begin{bmatrix} G_1 \\ \vdots \\ G_K \end{bmatrix}\right) \cdot \left([a(\theta_1) \quad \cdots \quad a(\theta_K)] \cdot \begin{bmatrix} G_1 \\ \vdots \\ G_K \end{bmatrix}\right)^H\right\} + \sigma^2 I$$

$$= [a(\theta_1) \quad \cdots \quad a(\theta_K)] \cdot E\left\{\begin{bmatrix} G_1 \\ \vdots \\ G_K \end{bmatrix} \cdot \begin{bmatrix} G_1 \\ \vdots \\ G_K \end{bmatrix}^H\right\} [a(\theta_1) \quad \cdots \quad a(\theta_K)]^H + \sigma^2 I ...(10),$$

where $\sigma^2$ is a variance of the noise (also known as noise power), and I is an unit matrix. In this way, the computing processor 50 may estimate the Angle of Arrivals $\theta_1$-$\theta_K$ of the first to the Kth external objects, and obtain the azimuth information accordingly.

Take K=2 (i.e. two external objects) as an example,

$$\mathbf{R_{yy}} = [a(\theta_1) \quad a(\theta_2)] \cdot E\left\{\begin{matrix} G_1 G_1^H & G_1 G_2^H \\ G_2 G_1^H & G_2 G_2^H \end{matrix}\right\} [a(\theta_1) \quad a(\theta_2)]^H + \sigma^2 \mathbf{I} ...(11),$$

where $\theta_1$ and $\theta_2$ are the azimuth information (e.g. Angle of Arrivals) corresponding to the two external objects, respectively.

The Angle of Arrival (AoA) estimation algorithms include, for example, the Multiple Signal Classification Algorithm (MUSIC), the Root-MUSIC algorithm, or the Estimation of Signal Parameters via Rotational Invariance Techniques (ESPRIT) algorithm.

Take MUSIC as an example, assuming K=1 (i.e. one external object), formula (10) may be converted into:

$$R_{yy} = \underbrace{G_1^2 \cdot a(\theta_1) \cdot a^H(\theta_1)}_{H} + \sigma^2 I ... (12).$$

A 4x4 symmetric matrix H has one positive eigenvalue $\lambda_1$. Let $q_1$ denote the eigenvalue corresponding to an eigenvector $\lambda_1$, and

H. $q_1 = \lambda_1 \cdot q_1$... (13) may be obtained, wherein in the signal space, the largest eigenvalue of $R_{uu}$ is $(\lambda_1 + \sigma^2)$ with the corresponding eigenvector q1.

Let other eigenvalues be $\lambda_2, \lambda_3, \lambda_4$ and assign the same noise variance $\sigma^2$, then the corresponding eigenvectors $\lambda_2, \lambda_3, \lambda_4$ may satisfy:

$$H \cdot [q_2 \ q_3 \ q_4] = [0 \ 0 \ 0] \ ... (14),$$

where $a^H(\theta_1) \cdot [q_2 \ q_3 \ q_4] = [0 \ 0 \ 0]$.

These eigenvectors $\lambda_2, \lambda_3, \lambda_4$ are located in the null space of the signal. Take the inner product of these with the vector $a(\theta)$:

$$L(\theta) = |a^H(\theta) \cdot [q_2 \ q_3 \ q_4]|^2 ...(15).$$

Let an evaluation function value L($\lambda$) at $\theta = \theta_1$ is 0, and its eigenspectrum may be defined as:

$$S(\theta) \triangleq \frac{1}{L(\theta)} ...(16),$$

and S($\theta$) has a peak at $\theta = \theta_1$.

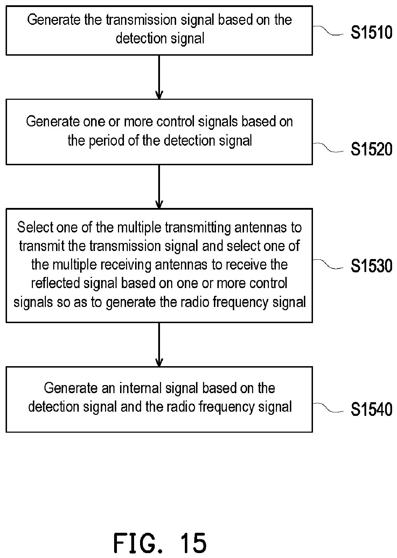

Figure 15 is a flowchart of a transceiving method of signals according to an embodiment of the disclosure. Please refer to Figures 1 and 15. Generate the transmission signal based on the detection signal (step S1510), in which the detection signal has periodic changes. For example, the detection signal TS1 in Figure 5 is presented as a triangular wave with frequency changes, and the detection signal TS2 is presented as a sawtooth wave with frequency changes. Also, for example, the detection signal is a periodic pulse signal. Generate one or more control signals based on the period of the detection signal (step S1520), such as control signals TSSC, RXSC shown in Figure 5 or Figure 9. Select one of the multiple transmitting antennas to transmit the transmission signal and select one of the multiple receiving antennas to receive the reflected signal Based on one or more control signals so as to generate the radio frequency signal (step 51530). The reflected signals are generated by the reflection of the transmission signal by the external object. Generate an internal signal based on the detection signal and the radio frequency signal (step S1540).

In an embodiment, within one frame time, multiple transmission-reception combinations executed at different times (e.g. different transceiving periods) based on one or more control signals correspond to multiple time-division reflected signals. Each transmission-reception combination includes a combination of one of the multiple transmitting antennas 12 and one of the multiple receiving antennas 13, such as "TX1+RX1", "TX1+RX2", "TX2+RX1" and "TX2+RX2" shown in Figure 5. The time-division reflected signal includes the reflected signals received at different times (e.g. different transceiving periods) in this frame time. The phase differences between at least two sets of two adjacent time-division reflected signals in time sequence in these time-division reflected signals are equal. For example, the phase difference is

$$\frac{2\pi}{\lambda} d\sin\theta$$
.

The implementation details of each step in Figure 15 have been explained in detail in the above embodiments and implementation methods, and will not be repeated. In addition to being implemented in the form of a circuit, the steps and implementation details of the embodiments of the disclosure may also be implemented by a processor in the form of software, and the embodiments of the disclosure are not limited thereto.

In summary, according to the radar apparatus and transceiving method of signals of the embodiments of the disclosure, signals are transmitted and received sequentially via time-division transmission-reception combinations. With the structure of dual transmitting antennas and dual receiving antennas, the effect of having one virtual transmitting antenna and three virtual receiving antennas or one virtual transmitting antenna and four virtual receiving antennas can be achieved. Thereby, it is possible to reduce power consumption, reduce the size of the antenna structure or chip, and reduce phase error. Compared to a structure with one transmitting antenna and two receiving antennas, different external objects at the same distance from the receiving antenna can also be clearly identified. Moreover, in the embodiment where multiple transmitting antennas are used in time-division and multiple receiving antennas are used simultaneously, the effect of reducing part of the power consumption and reducing the size of part of the antenna structure or chip can also be achieved. Further, in the embodiment where the phase differences between at least two sets of two adjacent time-division reflected signals in time sequence in the time-division reflected signals are set to be equal, the computation can be made more concise and convenient, reducing the computation time and improving the efficiency of the radar apparatus.

Although the disclosure has been disclosed as above in embodiments, it is not intended to limit the disclosure. Any person of ordinary skill in the art, without departing from the spirit and scope of the disclosure, may make minor modifications and embellishments. Thus, the scope of protection of the disclosure should be defined by the appended claims.

**Claims**

1. A radar apparatus (10, 20, 30, 40), comprising:

    a transmitting circuit (11), configured to generate a transmission signal based on a detection signal, wherein the detection signal has periodic changes;
    a plurality of transmitting antennas (12), configured to transmit the transmission signal;
    a plurality of receiving antennas (13), configured to receive a reflected signal, wherein the reflected signal is generated by the transmission signal being reflected by an external object; and
    a receiving circuit (14), configured to generate an internal signal based on the detection signal and a radio frequency signal;
**characterized by** comprising:

a selection controller (15), coupled to the transmitting circuit (11) and configured to generate one or more control signals based on a period of the detection signal; and
a selection circuit (16), coupled to the transmitting antennas (12), the receiving antennas (13), the transmitting circuit (11), the receiving circuit (14), and the selection controller (15) and configured to select one of the transmitting antennas (12) to transmit the transmission signal and select one of the receiving antennas (13) to receive the reflected signal based on the one or more control signals generated by the selection controller (15) so as to generate the radio frequency signal.

2. The radar apparatus (10, 20, 30, 40) according to claim 1, **characterized in that:**

one frame time comprises a plurality of transceiving periods;
the transceiving periods correspond to the period of the detection signal; and
the selection circuit (15) is further configured to, based on the one or more control signals, select only one of the transmitting antennas (12) respectively in each of the transceiving periods within the frame time to transmit the transmission signal and select only one of the receiving antennas (13) respectively in each of the transceiving periods within the frame time to receive the reflected signal.

3. The radar apparatus (20, 30) according to any of claims 1-2, **characterized in that:**

the transmitting antennas (12) comprise a first transmitting antenna (TX1) and a second transmitting antenna (TX2) located on a first plane; and
the receiving antennas (13) comprise a first receiving antenna (RX1) and a second receiving antenna (RX2) located on the first plane.

4. The radar apparatus (20, 30) according to claim 3, **characterized in that:**

the first transmitting antenna (TX1) and the second transmitting antenna (TX2) are arranged in a first direction;
the first receiving antenna (RX1) and the second receiving antenna (RX2) are arranged in the first direction;
in a second direction, a distance between the first transmitting antenna (TX1) and the first receiving antenna (RX1) is greater than or equal to zero;
the second direction is perpendicular to the first direction; and
the first plane is formed by the first direction and the second direction.

5. The radar apparatus (20, 30) according to claim 3, **characterized in that:**

there is a first spacing (L1) between the first transmitting antenna (TX1) and the second transmitting antenna (TX2);
there is a second spacing (L2) between the first receiving antenna (RX1) and the second receiving antenna (RX2); and
the first spacing (L1) and the second spacing (L2) are equal.

6. The radar apparatus (20, 30) according to claim 3, **further characterized by** comprising a computing processor (50) coupled to the receiving circuit (14) and **characterized in that:**

in a first operation mode, the frame time comprises a first transceiving period, a second transceiving period, and a third transceiving period;
the selection circuit (16) is further configured to, based on the one or more control signals, select the first transmitting antenna (TX1) and the first receiving antenna (RX1) in the first transceiving period, select the first transmitting antenna (TX1) and the second receiving antenna (RX2) or select the second transmitting antenna (TX2) and the first receiving antenna (RX1) in the second transceiving period, and select the second transmitting antenna (TX2) and the second receiving antenna (RX2) in the third transceiving period;
the receiving circuit (14) generates a first internal signal corresponding to the first transceiving period;
the receiving circuit (14) generates a second internal signal corresponding to the second transceiving period;
the receiving circuit (14) generates a third internal signal corresponding to the third transceiving period;
the internal signal comprises the first internal signal, the second internal signal, and the third internal signal; and

the computing processor (50) is configured to determine a spatial information of the external object based on the first internal signal, the second internal signal, and the third internal signal.

7. The radar apparatus (20, 30) according to claim 3, **characterized in that** a first radiation pattern formed by the first transmitting antenna (TX1) is different from a second radiation pattern formed by the second transmitting antenna (TX2).

8. The radar apparatus (20, 30) according to claim 3, **characterized in that:**

the first transmitting antenna (TX1) and the second transmitting antenna (TX2) are arranged in a first direction;
the first receiving antenna (RX1) and the second receiving antenna (RX2) are arranged in a second direction;
the second direction is perpendicular to the first direction; and
the first plane is formed by the first direction and the second direction.

9. The radar apparatus according to claim 8 (20, 30), **further characterized by** comprising a computing processor (50) coupled to the receiving circuit (14) and **characterized in that:**

in a second operation mode, the frame time comprises a first transceiving period, a second transceiving period, a third transceiving period, and a fourth transceiving period; and
the selection circuit (16) is further configured to, based on the one or more control signals, select the first transmitting antenna (TX1) and the first receiving antenna (RX1) in the first transceiving period, select the first transmitting antenna (TX1) and the second receiving antenna (RX2) in the second transceiving period, select the second transmitting antenna (TX2) and the second receiving antenna (RX2) in the third transceiving period, and select the second transmitting antenna (TX2) and the first receiving antenna (RX1) in the fourth transceiving period;
the receiving circuit (14) generates a first internal signal corresponding to the first transceiving period;
the receiving circuit (14) generates a second internal signal corresponding to the second transceiving period;
the receiving circuit (14) generates a third internal signal corresponding to the third transceiving period;
the receiving circuit (14) generates a fourth internal signal corresponding to the fourth transceiving period;
the internal signal comprises the first internal signal, the second internal signal, the third internal signal, and the fourth internal signal; and
the computing processor (50) is configured to determine a spatial information of the external object based on the first internal signal, the second internal signal, the third internal signal, and the fourth internal signal.

10. The radar apparatus (20) according to any of claims 1-9, further **characterized by** comprising:

a frequency synthesizer (171) or a pulse generator (172), coupled to the transmitting circuit (11) and the receiving circuit (14) and configured to generate the detection signal, the detection signal being a continuous wave signal or a pulse signal, wherein the selection controller (15) is coupled to the transmitting circuit (11) via the frequency synthesizer (171) or the pulse generator (172); and
a clock generator (19), coupled to the frequency synthesizer (171) or the pulse generator (172) and configured to generate a clock signal, wherein the frequency synthesizer (171) or the pulse generator (172) is configured to generate the detection signal based on the clock signal, and the selection controller (15) synchronizes the detection signal based on the clock signal.

11. A transceiving method of signals, **characterized by** comprising:

generating a transmission signal based on a detection signal, wherein the detection signal has periodic changes;
generating one or more control signals based on a period of the detection signal;
selecting one of a plurality of transmitting antennas (12) to transmit the transmission signal and selecting one of a plurality of receiving antennas (13) to receive a reflected signal based on the one or more control signals so as to generate a radio frequency signal, wherein the reflected signal is generated by the transmission signal being reflected by an external object; and
generating an internal signal based on the detection signal and the radio frequency signal.

12. The transceiving method of signals according to claim 11, **characterized in that:**

one frame time comprises a plurality of transceiving period;

the transceiving periods correspond to the period of the detection signal; and

selecting one of the transmitting antennas (12) to transmit the transmission signal and selecting one of the receiving antennas (13) to receive the reflected signal based on the one or more control signals comprises: based on the one or more control signals, selecting only one of the transmitting antennas (12) respectively in each of the transceiving periods within the frame time to transmit the transmission signal and selecting only one of the receiving antennas (13) respectively in each of the transceiving periods within the frame time to receive the reflected signal.

13. The transceiving method of signals according to claim 12, **characterized in that:**

in a first operation mode, the frame time comprises a first transceiving period, a second transceiving period, and a third transceiving period;

selecting only one of the transmitting antennas (12) respectively in each of the transceiving periods within the frame time to transmit the transmission signal and selecting only one of the receiving antennas (13) respectively in each of the transceiving periods within the frame time to receive the reflected signal based on the one or more control signals so as to generate the radio frequency signal comprises:

based on the one or more control signals, selecting the first transmitting antenna (TX1) and the first receiving antenna (RX1) in the first transceiving period;

selecting the first transmitting antenna (TX1) and the second receiving antenna (RX2) or selecting the second transmitting antenna (TX2) and the first receiving antenna (RX1) in the second transceiving period; and

selecting the second transmitting antenna (TX2) and the second receiving antenna (RX2) in the third transceiving period; and

generating the internal signal based on the detection signal and the radio frequency signal comprises:

generating a first internal signal corresponding to the first transceiving period;

generating a second internal signal corresponding to the second transceiving period; and

generating third internal signal corresponding to the third transceiving period, wherein the internal signal comprises the first internal signal, the second internal signal, and the third internal signal; and

determining a spatial information of the external object based on the first internal signal, the second internal signal, and the third internal signal.

14. The transceiving method of signals according to claim 12, **characterized in that:**

in a second operation mode, the frame time comprises a first transceiving period, a second transceiving period, a third transceiving period, and a fourth transceiving period;

selecting only one of the transmitting antennas (12) respectively in each of the transceiving periods within the frame time to transmit the transmission signal and selecting only one of the receiving antennas (13) respectively in each of the transceiving periods within the frame time to receive the reflected signal based on the one or more control signals so as to generate the radio frequency signal comprises:

based on the one or more control signals, selecting the first transmitting antenna (TX1) and the first receiving antenna (RX1) in the first transceiving period;

selecting the first transmitting antenna (TX1) and the second receiving antenna (RX2) in the second transceiving period;

selecting the second transmitting antenna (TX2) and the second receiving antenna (RX2) in the third transceiving period; and

selecting the second transmitting antenna (TX2) and the first receiving antenna (RX1) in the fourth transceiving period; and

generating the internal signal based on the detection signal and the radio frequency signal comprises:

generating a first internal signal corresponding to the first transceiving period;

generating a second internal signal corresponding to the second transceiving period;

generating a third internal signal corresponding to the third transceiving period;

generating a fourth internal signal corresponding to the fourth transceiving period, wherein the internal signal comprises the first internal signal, the second internal signal, the third internal signal, and the fourth internal signal; and

determining a spatial information of the external object based on the first internal signal, the second internal signal, the third internal signal, and the fourth internal signal.

15. A radar apparatus (10, 20, 30, 40), comprising:

a transmitting circuit (11), configured to generate a transmission signal based on a detection signal, wherein the detection signal has periodic changes;

a plurality of transmitting antennas (12), configured to transmit the transmission signal;

a plurality of receiving antennas (13), configured to respectively receiving a plurality of reflected signals to generate a plurality of radio frequency signals, wherein the reflected signals are generated by the transmission signal being reflected by an external object;

a receiving circuit (14), configured to generate an internal signal based on the detection signal and the radio frequency signals;

**characterized by** comprising:

a selection controller (15), coupled to the transmitting circuit (11) and configured to generate a control signal based a period of the detection signal; and

a selection circuit (16) coupled to the transmitting antennas (12), the transmitting circuit (11), and the selection controller (15) and configured to select one of the transmitting antennas (12) to transmit the transmission signal based on the control signal generated by the selection controller (15).

FIG. 1

FIG. 2A

FIG. 2B

EP 4 560 350 A1

FIG. 3

FIG. 4A

FIG. 4B

FIG. 5

EP 4 560 350 A1

FIG. 6A

FIG. 6B

FIG. 6C

(X)
Y

L3

TX2    TX1

RX2

L4

RX1

Z    X(Y)

FIG. 7A

(X)
Y

TX2

L5

TX1    RX1    RX2

L6

Z    X(Y)

FIG. 7B

FIG. 8

FIG. 9

FIG. 10A

FIG. 10B

FIG. 11A

FIG. 11B

Radar apparatus

40

Selection controller — 15

12

12 ... 12

16

Selection circuit

Transmitting circuit

11

13

13 ... 13

14

Receiving circuit

173

I/Q Detection circuit

FIG. 12

```
1310 ─  ┌─────────────────────┐
         │ Transmit transmission│
         │       signals        │
         └─────────────────────┘
```

Transmit transmission signals — 1310

Establish a virtual transmission-reception combination — 1320

Determine distance information — 1330

Determine whether or not there is an external object — 1340

Determine the number of external objects — 1350

Determine an azimuth information — 1360

FIG. 13

FIG. 14

```
┌─────────────────────────────────────┐
│  Generate the transmission signal    │
│  based on the detection signal       │──── S1510
└─────────────────────────────────────┘
                    │
                    ▼
┌─────────────────────────────────────┐
│  Generate one or more control        │
│  signals based on the period of      │──── S1520
│  the detection signal                │
└─────────────────────────────────────┘
                    │
                    ▼
┌─────────────────────────────────────┐
│  Select one of the multiple          │
│  transmitting antennas to transmit   │
│  the transmission signal and select  │
│  one of the multiple receiving       │──── S1530
│  antennas to receive the reflected   │
│  signal based on one or more control │
│  signals so as to generate the radio │
│  frequency signal                    │
└─────────────────────────────────────┘
                    │
                    ▼
┌─────────────────────────────────────┐
│  Generate an internal signal based   │
│  on the detection signal and the     │──── S1540
│  radio frequency signal              │
└─────────────────────────────────────┘
```

# FIG. 15

**EUROPEAN SEARCH REPORT**

Application Number

EP 24 21 4716

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/183719 A1 (NATSUME KAZUMA [JP] ET AL) 23 September 2004 (2004-09-23) | 1-14 | INV.<br>G01S7/35 |
| A | * paragraphs [0049] - [0063]; figures 1,2,4A * | 15 | G01S13/34<br>H04B7/06<br>H04B7/08 |
| | ----- | | |
| X | US 2022/003834 A1 (IWASA KENTA [JP] ET AL) 6 January 2022 (2022-01-06) | 15 | ADD.<br>G01S13/02 |
| A | * paragraphs [0093] - [0122], [0194], [0324] - [0338]; figures 1B, 14, 27, 28 * | 1-14 | G01S13/10<br>G01S13/42<br>G01S13/931 |
| | ----- | | |

TECHNICAL FIELDS
SEARCHED       (IPC)

G01S
H04B

The present search report has been drawn up for all claims

| Place of search | Date of completion of the search | Examiner |
|---|---|---|
| Munich | 14 March 2025 | Reeck, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 24 21 4716

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | Publication date | Patent family member(s) | Publication date |
|---|---|---|---|
| US 2004183719 A1 | 23-09-2004 | DE 102004006519 A1 | 19-08-2004 |
| | | JP 3988653 B2 | 10-10-2007 |
| | | JP 2004245602 A | 02-09-2004 |
| | | US 2004183719 A1 | 23-09-2004 |
| US 2022003834 A1 | 06-01-2022 | DE 112020001356 T5 | 16-12-2021 |
| | | JP 7573926 B2 | 28-10-2024 |
| | | JP 2020153869 A | 24-09-2020 |
| | | US 2022003834 A1 | 06-01-2022 |
| | | WO 2020189457 A1 | 24-09-2020 |

EPO FORM P0459

For more details about this annex : see Official Journal of the European Patent Office, No. 12/82